# EUROPÄISCHE PATENTANMELDUNG

(11) **EP 3 184 218 A1**
(43) Veröffentlichungstag der Anmeldung: **28.06.2017**
(21) Anmeldenummer: 15202116.8
(22) Anmeldetag: 22.12.2015
(51) Int. Cl.: B23B 51/04

(54) **SET AUS MEHREREN BOHRKRONENABSCHNITTEN ZUM AUFBAU EINER BOHRKRONE**

(71) Anmelder: HILTI Aktiengesellschaft, 9494 Schaan (LI)
(72) Erfinder: Mueller, Matthias, 9470 Buchs (CH); Amman, Christoph, 9486 Schaanwald (LI); Hoop, Matthaeus, 9492 Eschen (LI)
(74) Vertreter: Hilti Aktiengesellschaft Corporate Intellectual Property

(57) **Zusammenfassung**

Set aus mehreren Bohrkronenabschnitten (12, 13) zum Aufbau einer Bohrkrone (10), die um eine Bohrachse (22) antreibbar ist, aufweisend einen ersten Bohrschaftabschnitt (12) mit einem ersten Bohrschaft (18), der eine Querschnittsform mit einem ersten Außendurchmesser und einem ersten Innendurchmesser aufweist, und einem ersten Kupplungsstück (19), einen zweiten Bohrschaftabschnitt mit einem zweiten Bohrschaft und einem zweiten Kupplungsstück und einen ersten Aufnahmeabschnitt (13) mit einem ersten Kupplungsgegenstück (20) und einem ersten Einsteckende (21). Das erste Kupplungsgegenstück (20) des ersten Aufnahmeabschnittes (13) ist mit dem ersten Kupplungsstück (19) des ersten Bohrschaftabschnittes (12) und mit dem zweiten Kupplungsstück des zweiten Bohrschaftabschnittes verbindbar.

## Beschreibung

### Technisches Gebiet

Die vorliegende Erfindung betrifft ein Set aus mehreren Bohrkronenabschnitten zum Aufbau einer Bohrkrone gemäß dem Oberbegriff des Anspruchs 1.

### Stand der Technik

Bohrkronen bestehen aus mehreren Bohrkronenabschnitten, die als Schneidabschnitt, Bohrschaftabschnitt und Aufnahmeabschnitt ausgebildet sind. Der Schneidabschnitt umfasst einen Ringabschnitt und ein oder mehrere Schneidsegmente, die mit dem Ringabschnitt verschweißt, verlötet, verschraubt oder in einer anderen geeigneten Befestigungsart befestigt sind. Die Schneidsegmente sind ringförmig angeordnet und bilden in einer Ebene senkrecht zur Bohrachse einen Schneidring mit einem Innendurchmesser, einem Außendurchmesser und einer Segmentbreite. Der Bohrschaftabschnitt umfasst einen zylinderförmigen Bohrschaft, der in einer Ebene senkrecht zur Bohrachse eine Ringform mit einem Innendurchmesser, einem Außendurchmesser und einer Schaftbreite aufweist. Der Aufnahmeabschnitt umfasst einen Deckel und ein Einsteckende, über das die Bohrkrone in der Werkzeugaufnahme eines Kernbohrgerätes befestigt wird. Für die Größenverhältnisse zwischen dem Bohrschaft und dem Schneidring gilt, dass der Innendurchmesser des Bohrschaftes grösser als der Innendurchmesser des Schneidringes ist, der Außendurchmesser des Bohrschaftes kleiner als der Außendurchmesser des Schneidringes ist und die Schaftbreite des Bohrschaftes kleiner als die Segmentbreite des Schneidringes ist.

Der Bohrschaftabschnitt ist über eine erste Verbindung mit dem Aufnahmeabschnitt und über eine zweite Verbindung mit dem Schneidabschnitt verbunden. Die erste Verbindung und die zweite Verbindung können als lösbare Verbindungen oder als nicht-lösbare Verbindungen ausgebildet sein. Bekannt sind Bohrkronen mit einer lösbaren ersten und einer lösbaren zweiten Verbindung, Bohrkronen mit einer lösbaren ersten und einer nicht-lösbaren zweiten Verbindung, Bohrkronen mit einer nicht-lösbaren ersten und einer lösbaren zweiten Verbindung und Bohrkronen mit einer nicht-lösbaren ersten und einer nicht-lösbaren zweiten Verbindung. Bei Bohrkronen mit einer lösbaren zweiten Verbindung sind der Ringabschnitt und der Bohrschaft lösbar verbunden, beispielsweise über kombinierte Steck- und Stiftverbindungen mit einem losen Stiftelement, wie sie in WO 2013/093060 A1 beschrieben sind, oder über kombinierte Steck- und Stiftverbindungen mit einem festen Stiftelement, wie sie in WO 2014/096360 A1 und WO2014/096366 A1 beschrieben. Bei Bohrkronen mit einer nicht-lösbaren zweiten Verbindung können der Ringabschnitt und der Bohrschaft monolithisch ausgebildet sein; alternativ kann der Ringabschnitt stoffschlüssig mit dem Bohrschaft verbunden sein.

EP 0 314 123 B1 offenbart eine Bohrkrone mit einer lösbaren ersten Verbindung zwischen dem Bohrschaftabschnitt und dem Aufnahmeabschnitt. Der Bohrschaftabschnitt umfasst neben dem zylinderförmigen Bohrschaft ein Kupplungsstück, das mit dem Bohrschaft auf der dem Schneidabschnitt abgewandten Seite verbunden ist. Das Kupplungsstück umfasst eine durchgehende Innenbohrung mit einem Öffnungsdurchmesser und ein erstes Verbindungselement. Der Aufnahmeabschnitt umfasst neben dem Deckel und Einsteckende ein Kupplungsgegenstück, das ein zweites Verbindungselement aufweist. Das erste Verbindungselement des Kupplungsstücks und das zweite Verbindungselement des Kupplungsgegenstücks bilden die lösbare erste Verbindung der Bohrkrone, die als Bajonett-Verbindung ausgebildet ist. Die aus EP 0 314 123 B1 bekannte Bohrkrone weist Nachteile auf, wenn der Bohrkern in der Bohrkrone steckt und nach dem Kernbohren vom Bediener aus der Bohrkrone entfernt werden muss.

### Darstellung der Erfindung

Die Aufgabe der vorliegenden Erfindung besteht demgegenüber darin, ein Set aus mehreren Bohrkronenabschnitten zum Aufbau einer Bohrkrone dahingehend weiterzuentwickeln, dass das Entfernen eines Bohrkerns, der in der Bohrkrone steckt, für den Bediener vereinfacht wird. Dabei soll der Fertigungsaufwand bei der Herstellung der Bohrkronenabschnitte möglichst gering sein.

Diese Aufgabe wird bei dem eingangs genannten Set aus mehreren Bohrkronenabschnitten erfindungsgemäß durch die Merkmale des unabhängigen Anspruchs 1 gelöst. Vorteilhafte Ausgestaltungen ergeben sich aus den abhängigen Ansprüchen.

Erfindungsgemäß ist vorgesehen, dass das erste Kupplungsgegenstück des ersten Aufnahmeabschnittes mit dem ersten Kupplungsstück des ersten Bohrschaftabschnittes und mit dem zweiten Kupplungsstück des zweiten Bohrschaftabschnittes verbindbar ist. Das erfindungsgemäße Set umfasst einen ersten Bohrschaftabschnitt mit einem ersten Kupplungsstück, einen zweiten Bohrschaftabschnitt mit einem zweiten Kupplungsstück und einen ersten Aufnahmeabschnitt mit einem ersten Kupplungsgegenstück. Da das erste Kupplungsgegenstück mit dem ersten und zweiten Kupplungsstück verbindbar ist, kann der erste Aufnahmeabschnitt mit dem ersten Bohrschaftabschnitt oder mit dem zweiten Bohrschaftabschnitt zu einer Bohrkrone zusammengesetzt werden. Der Fertigungsaufwand bei der Herstellung der Bohrkronenabschnitte ist reduziert, da für unterschiedliche Bohrschaftabschnitte nur ein Aufnahmeabschnitt erforderlich ist. Die Herstellkosten für die Herstellung der Aufnahmeabschnitte sinken mit steigender Stückzahl an identischen Aufnahmeabschnitten.

Das erfindungsgemäße Set aus mehreren Bohrkronenabschnitten umfasst einen ersten Bohrschaftabschnitt, einen zweiten Bohrschaftabschnitt und einen ersten Aufnahmeabschnitt. Der erste Bohrschaftabschnitt weist einen ersten Bohrschaft und ein erstes Kupplungsstück mit einer durchgehenden ersten Innenbohrung auf, der zweite Bohrschaftabschnitt weist einen zweiten Bohrschaft und ein zweites Kupplungsstück mit einer durchgehenden zweiten Innenbohrung auf und der erste Aufnahmeabschnitt weist ein erstes Kupplungsgegenstück und ein erstes Einsteckende auf.

Bevorzugt ist der erste Öffnungsdurchmesser d₁ der ersten Innenbohrung grösser als der erste Innendurchmesser d_{I1} des ersten Bohrschaftes und der zweite Öffnungsdurchmesser d₂ der zweiten Innenbohrung ist grösser oder gleich dem zweiten Innendurchmesser d_{I2} des zweiten Bohrschaftes, wobei die kleinste Abmessung einer Innenbohrung als Öffnungsdurchmesser definiert ist. Das erfindungsgemäße Set umfasst den ersten und zweiten Bohrschaftabschnitt, wobei die Verbindung zwischen den Bohrschaftabschnitten und dem Aufnahmeabschnitt lösbar ausgebildet ist. Die lösbare Verbindung zwischen den Kupplungsstücken der Bohrschäfte und dem ersten Kupplungsgegenstück des ersten Aufnahmeabschnittes kann dazu genutzt werden, den Bohrkern aus der Bohrkrone zu entfernen.

Die Schneidsegmente bilden einen Schneidring mit einem Innendurchmesser und einem Außendurchmesser. Der Innendurchmesser des Schneidrings legt den Durchmesser des Bohrkerns und der Außendurchmesser des Schneidrings den Durchmesser des Bohrlochs fest. Um den Bohrkern zu entfernen, wird der erste Aufnahmeabschnitt vom ersten oder zweiten Bohrschaftabschnitt entfernt und der Bohrkern durch das Kupplungsstück geschoben. Die Innenbohrungen des ersten und zweiten Kupplungsstücks sind so gestaltet, dass die Öffnungsdurchmesser der Innenbohrungen grösser als der Durchmesser des Bohrkerns sind. Um ein Verklemmen des Bohrkerns in der Innenbohrung zu verhindern, ist der erste Öffnungsdurchmesser d₁ der ersten Innenbohrung grösser als der erste Innendurchmesser d_{I1} des ersten Bohrschaftes und der zweite Öffnungsdurchmesser d₂ der zweiten Innenbohrung ist grösser oder gleich dem zweiten Innendurchmesser d_{I2} des zweiten Bohrschaftes.

Besonders bevorzugt weisen das erste und zweite Kupplungsstück eine im Wesentlichen identische Geometrie auf. Der erste und zweite Bohrschaftabschnitt des erfindungsgemäßen Sets unterscheiden sich im Innendurchmesser der Bohrschäfte, wobei der zweite Innendurchmesser d_{I2} des zweiten Bohrschaftes grösser als der erste Innendurchmesser d_{I1} des ersten Bohrschaftes ist. Wenn das erste und zweite Kupplungsstück eine identische Geometrie aufweisen, kann ein identisches Kupplungsstück für das erste und zweite Kupplungsstück verwendet und der Fertigungsaufwand reduziert werden. Die Anpassung des Kupplungsstücks an den Innen- und Außendurchmesser des Bohrschaftes kann beispielsweise über einen Zwischenring erfolgen.

Besonders bevorzugt sind das erste Kupplungsstück aus einem ersten Kupplungsmaterial und das zweite Kupplungsstück aus einem zweiten Kupplungsmaterial hergestellt. Die Auswahl eines geeigneten Kupplungsmaterials hängt unter anderem von den Belastungen des ersten und zweiten Kupplungsstücks ab. Die Verwendung von Kunststoff als Kupplungsmaterial bietet ein geringeres Gewicht als Stahl, hat aber den Nachteil einer geringeren Festigkeit. Wenn der erste und zweite Bohrschaftabschnitt unterschiedlichen Belastungen ausgesetzt sind, bietet sich die Verwendung von verschiedenen Kupplungsmaterialen an.

Besonders bevorzugt sind das erste und zweite Kupplungsstück als erstes Kupplungsteil ausgebildet. Wenn das erste und zweite Kupplungsstück eine identische Geometrie aufweisen und aus dem gleichen Kupplungsmaterial hergestellt sind, kann für das erste und zweite Kupplungsstück ein identisches Kupplungsstück verwendet werden. Um den Fertigungsaufwand für das erste und zweite Kupplungsstück zu reduzieren, kann der erste und zweite Bohrschaft, die sich im Innendurchmesser unterscheiden, mit dem identischen Kupplungsstück verbunden werden, das als erstes Kupplungsteil bezeichnet wird.

In einer bevorzugten Ausführung sind das erste Kupplungsgegenstück und das erste Einsteckende des ersten Aufnahmeabschnittes einteilig ausgebildet. Die einteilige Ausbildung des ersten Aufnahmeabschnittes bietet sich an, wenn eine Bohrkrone von Kernbohrgeräten mit einer einheitlichen Werkzeugaufnahme angetrieben werden soll. Ein einteiliger Aufnahmeabschnitt kann kompakter als ein mehrteiliger Aufnahmeabschnitt ausgebildet sein.

In einer alternativen bevorzugten Ausführung ist der erste Aufnahmeabschnitt mehrteilig aus einem ersten Adapter, der das erste Kupplungsgegenstück umfasst, und einem zweiten Adapter, der das erste Einsteckende umfasst, ausgebildet, wobei der erste und zweite Adapter über eine lösbare Verbindung verbindbar sind. Die mehrteilige Ausbildung des ersten Aufnahmeabschnittes aus einem ersten und zweiten Adapter hat den Vorteil, dass verschiedene Einsteckenden mit einer Bohrkrone kombiniert werden können oder das Einsteckende mit mehreren Bohrkronen verwendet werden kann. Die lösbare Verbindung zwischen dem ersten und zweiten Adapter bildet eine sogenannte logistische Schnittstelle, die beispielsweise als Gewindeverbindung ausgebildet ist. Die mehrteilige Ausbildung des ersten Aufnahmeabschnittes bietet sich an, wenn eine Bohrkrone von Kernbohrgeräten mit unterschiedlichen Werkzeugaufnahmen angetrieben werden soll. Für jede Werkzeugaufnahme ist nur ein zweiter Adapter mit passendem Einsteckende erforderlich, beispielsweise ein zweiter Adapter für ein BI+-Einsteckende und ein zweiter Adapter für ein BL-Einsteckende. Die Anzahl an benötigten ersten Adaptern des Aufnahmeabschnittes entspricht der Anzahl an unterschiedlichen Kupplungsstücken der Bohrschaftabschnitte. Jeder erste Adapter kann mit jedem zweiten Adapter kombiniert werden.

In einer bevorzugten Weiterentwicklung umfasst das Set:
▪ einen dritten Bohrschaftabschnitt mit einem dritten Bohrschaft, der eine Querschnittsform mit einem dritten Außendurchmesser d_{A3} und einem dritten Innendurchmesser d_{I2} aufweist, und einem dritten Kupplungsstück, das eine durchgehende dritte Innenbohrung mit einem dritten Öffnungsdurchmesser d₃ aufweist, wobei der dritte Innendurchmesser d_{I2} grösser als der zweite Innendurchmesser d_{I2} ist,
▪ einen vierten Bohrschaftabschnitt mit einem vierten Bohrschaft, der eine Querschnittsform mit einem vierten Außendurchmesser d_{A4} und einem vierten Innendurchmesser d_{I4} aufweist, und einem vierten Kupplungsstück, das eine vierte Innenbohrung mit einem vierten Öffnungsdurchmesser d₄ aufweist, wobei der vierte Innendurchmesser d_{I4} grösser als der dritte Innendurchmesser d_{I2} ist, und
▪ einen zweiten Aufnahmeabschnitt mit einem zweiten Kupplungsgegenstück und einem zweiten Einsteckende.

Das erfindungsgemäße Set umfasst zusätzlich einen dritten Bohrschaftabschnitt, einen vierten Bohrschaftabschnitt und einen zweiten Aufnahmeabschnitt. Der dritte Bohrschaftabschnitt weist einen dritten Bohrschaft und ein drittes Kupplungsstück mit einer durchgehenden dritten Innenbohrung auf, der vierte Bohrschaftabschnitt weist einen vierten Bohrschaft und ein viertes Kupplungsstück mit einer durchgehenden vierten Innenbohrung auf und der zweite Aufnahmeabschnitt weist ein zweites Kupplungsgegenstück und ein zweites Einsteckende auf. Für die Größenverhältnisse zwischen den Bohrschaftabschnitten gilt, dass der dritte Innendurchmesser d_{I2} des dritten Bohrschaftes grösser als der zweite Innendurchmesser d_{I2} des zweiten Bohrschaftes ist und der vierte Innendurchmesser d_{I4} des vierten Bohrschaftes grösser als der dritte Innendurchmesser d_{I2} des dritten Bohrschaftes ist.

Bevorzugt ist das zweite Kupplungsgegenstück mit dem dritten Kupplungsstück des dritten Bohrschaftabschnittes und dem vierten Kupplungsstück des vierten Bohrschaftabschnittes verbindbar. Da das zweite Kupplungsgegenstück mit dem dritten und vierten Kupplungsstück verbindbar ist, kann der zweite Aufnahmeabschnitt mit dem dritten Bohrschaftabschnitt oder mit dem vierten Bohrschaftabschnitt zu einer Bohrkrone zusammengesetzt werden. Der Fertigungsaufwand bei der Herstellung der Bohrkronenabschnitte ist reduziert, da für unterschiedliche Bohrschaftabschnitte nur ein Aufnahmeabschnitt erforderlich ist. Die Herstellkosten für die Herstellung der Aufnahmeabschnitte sinken mit steigender Stückzahl an identischen Aufnahmeabschnitten.

Besonders bevorzugt ist der dritte Öffnungsdurchmesser d₃ der dritten Innenbohrung grösser als der dritte Innendurchmesser d_{I2} des dritten Bohrschaftes und der vierte Öffnungsdurchmesser d₄ der vierten Innenbohrung ist grösser oder gleich dem vierten Innendurchmesser d_{I4} des vierten Bohrschaftes. Das erfindungsgemäße Set umfasst den dritten und vierten Bohrschaftabschnitt, wobei die Verbindung zwischen den Bohrschaftabschnitten und dem zweiten Aufnahmeabschnitt lösbar ausgebildet ist. Die lösbare Verbindung zwischen den Kupplungsstücken der Bohrschäfte und dem zweiten Kupplungsgegenstück des zweiten Aufnahmeabschnittes kann dazu genutzt werden, den Bohrkern aus der Bohrkrone zu entfernen. Um den Bohrkern zu entfernen, wird der zweite Aufnahmeabschnitt vom dritten oder vierten Bohrschaftabschnitt entfernt und der Bohrkern durch das Kupplungsstück geschoben. Die Innenbohrungen des dritten und vierten Kupplungsstücks sind so gestaltet, dass die Öffnungsdurchmesser der Innenbohrungen grösser als der Durchmesser des Bohrkerns sind. Um ein Verklemmen des Bohrkerns in der Innenbohrung zu verhindern, ist der dritte Öffnungsdurchmesser d₃ der dritten Innenbohrung grösser als der dritte Innendurchmesser d_{I2} des dritten Bohrschaftes und der vierte Öffnungsdurchmesser d₄ der vierten Innenbohrung ist grösser oder gleich dem vierten Innendurchmesser d_{I4} des vierten Bohrschaftes.

Besonders bevorzugt weisen das dritte und vierte Kupplungsstück eine im Wesentlichen identische Geometrie auf. Der dritte und vierte Bohrschaftabschnitt des erfindungsgemäßen Sets unterscheiden sich im Innendurchmesser der Bohrschäfte, wobei der vierte Innendurchmesser d_{I4} des vierten Bohrschaftes grösser als der dritte Innendurchmesser d_{I2} des dritten Bohrschaftes ist. Wenn das dritte und vierte Kupplungsstück eine identische Geometrie aufweisen, kann ein identisches Kupplungsstück für das dritte und vierte Kupplungsstück verwendet und der Fertigungsaufwand reduziert werden. Die Anpassung des Kupplungsstücks an den Innen- und Außendurchmesser des Bohrschaftes kann beispielsweise über einen Zwischenring erfolgen.

Besonders bevorzugt sind das dritte Kupplungsstück aus einem ersten Kupplungsmaterial und das vierte Kupplungsstück aus einem zweiten Kupplungsmaterial hergestellt. Die Auswahl eines geeigneten Kupplungsmaterials hängt unter anderem von den Belastungen des ersten und zweiten Kupplungsstücks ab. Die Verwendung von Kunststoff als Kupplungsmaterial bietet ein geringeres Gewicht als Stahl, hat aber den Nachteil einer geringeren Festigkeit. Wenn der dritte und vierte Bohrschaftabschnitt unterschiedlichen Belastungen ausgesetzt sind, bietet sich die Verwendung von verschiedenen Kupplungsmaterialen an. Besonders bevorzugt sind das dritte und vierte Kupplungsstück als zweites Kupplungsteil ausgebildet. Wenn das dritte und vierte Kupplungsstück eine identische Geometrie aufweisen und aus dem gleichen Kupplungsmaterial hergestellt sind, kann für das dritte und vierte Kupplungsstück ein identisches Kupplungsstück verwendet werden. Um den Herstellungsaufwand für das dritte und vierte Kupplungsstück zu reduzieren, kann der dritte und vierte Bohrschaft, die sich im Innendurchmesser unterscheiden, mit dem identischen Kupplungsstück verbunden werden, das als zweites Kupplungsteil bezeichnet wird.

In einer bevorzugten Ausführung sind das zweite Kupplungsgegenstück und das zweite Einsteckende des zweiten Aufnahmeabschnittes einteilig ausgebildet. Die einteilige Ausbildung des zweiten Aufnahmeabschnittes bietet sich an, wenn eine Bohrkrone von Kernbohrgeräten mit einer einheitlichen Werkzeugaufnahme angetrieben werden soll. Ein einteiliger Aufnahmeabschnitt kann kompakter als ein mehrteiliger Aufnahmeabschnitt ausgebildet sein.

In einer alternativen bevorzugten Ausführung ist der zweite Aufnahmeabschnitt mehrteilig aus einem ersten Adapter, der das zweite Kupplungsgegenstück umfasst, und einem zweiten Adapter, der das zweite Einsteckende umfasst, ausgebildet, wobei der erste und zweite Adapter über eine lösbare Verbindung verbindbar sind. Ein mehrteiliger zweiter Aufnahmeabschnitt hat den Vorteil, dass verschiedene Einsteckenden mit einer Bohrkrone kombiniert werden können oder das Einsteckende mit mehreren Bohrkronen verwendet werden kann. Die mehrteilige Ausbildung des zweiten Aufnahmeabschnittes bietet sich an, wenn eine Bohrkrone von Kernbohrgeräten mit unterschiedlichen Werkzeugaufnahmen angetrieben werden soll. Für jede Werkzeugaufnahme ist nur ein zweiter Adapter mit passendem Einsteckende erforderlich. Die Anzahl an benötigten ersten Adaptern des zweiten Aufnahmeabschnittes entspricht der Anzahl an unterschiedlichen Kupplungsstücken der Bohrschaftabschnitte. Jeder erste Adapter kann mit jedem zweiten Adapter des zweiten Aufnahmeabschnittes kombiniert werden.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine Bohrkrone mit einem Schneidabschnitt, einem ersten Bohrschaftabschnitt und einem Aufnahmeabschnitt;
- FIGN. 2A-C: ein Set aus dem ersten Bohrschaftabschnitt der FIG. 1 (FIG. 2A), einem zweiten Bohrschaftabschnitt (FIG. 2B) und dem Aufnahmeabschnitt der FIG. 1 (FIG. 2C) zum Aufbau der Bohrkrone der FIG. 1;
- FIGN. 3A-C: einen Längsschnitt durch den ersten Bohrschaftabschnitt entlang der Schnittlinie A-A in FIG. 2A (FIG. 3A), einen Längsschnitt durch den zweiten Bohrschaftabschnitt entlang der Schnittlinie B-B in FIG. 2B (FIG. 3B) und einen Längsschnitt durch den Aufnahmeabschnitt entlang der Schnittlinie C-C in FIG. 2C (FIG. 3C);
- FIGN. 4A-C: ein Set aus einem dritten Bohrschaftabschnitt (FIG. 4A), einem vierten Bohrschaftabschnitt (FIG. 4B) und einem weiteren Aufnahmeabschnitt (FIG. 4C) zum Aufbau einer weiteren Bohrkrone; und
- FIGN. 5A-C: einen Längsschnitt durch den dritten Bohrschaftabschnitt entlang der Schnittlinie A-A in FIG. 4A (FIG. 5A), einen Längsschnitt durch den vierten Bohrschaftabschnitt entlang der Schnittlinie B-B in FIG. 4B (FIG. 5B) und einen Längsschnitt durch den weiteren Aufnahmeabschnitt entlang der Schnittlinie C-C in FIG. 4C (FIG. 5C).

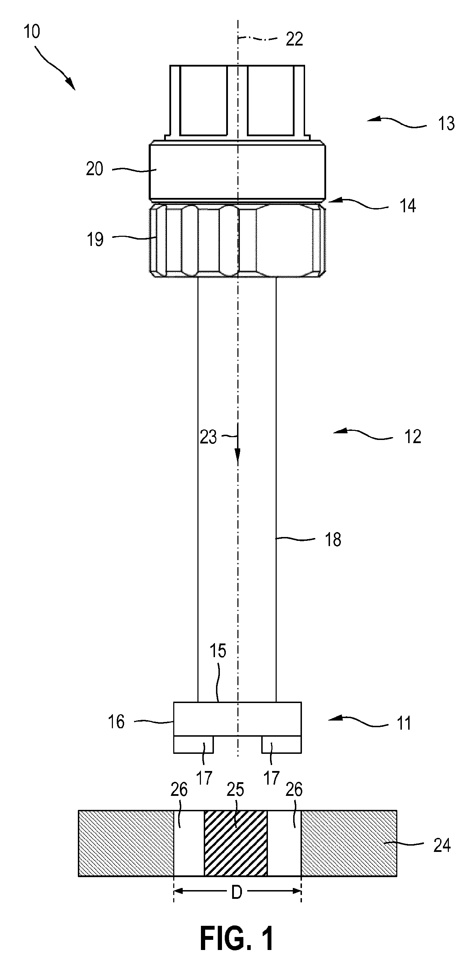

**FIG. 1** zeigt eine Bohrkrone **10,** die einen Schneidabschnitt **11,** einen Bohrschaftabschnitt **12** und einen Aufnahmeabschnitt **13** aufweist. Der Bohrschaftabschnitt 12 ist über eine lösbare erste Verbindung **14** mit dem Aufnahmeabschnitt 13 und über eine weitere Verbindung **15** mit dem Schneidabschnitt 11 verbindbar. Die weitere Verbindung 15 kann als lösbare oder nicht-lösbare Verbindung ausgebildet sein. Eine Verbindung wird als lösbar bezeichnet, wenn die Verbindung vom Anwender zerstörungsfrei gelöst werden kann, wie beispielsweise eine Steckverbindung, eine Stiftverbindung oder eine Gewindeverbindung. Eine Verbindung wird als nicht-lösbar bezeichnet, wenn der Anwender die Verbindung nur durch Zerstörung der Verbindungsmittel lösen kann, wie beispielsweise eine Lötverbindung, eine Schweißverbindung oder eine Klebeverbindung. FIG. 1 zeigt eine Bohrkrone, bei der die weitere Verbindung 15 als nicht-lösbare Verbindung ausgebildet ist.

Der Schneidabschnitt 11 umfasst einen Ringabschnitt **16** und mehrere Schneidsegmente **17,** die mit dem Ringabschnitt 16 verbunden sind. Die Schneidsegmente 17 sind mit dem Ringabschnitt 16 verschweißt, verlötet, verschraubt oder in einer anderen geeigneten Befestigungsart am Ringabschnitt 16 befestigt. Der Bohrschaftabschnitt 12 umfasst einen zylinderförmigen Bohrschaft **18** und ein Kupplungsstück **19,** das mit dem Bohrschaft 18 verbunden ist. Der Aufnahmeabschnitt 13 umfasst ein Kupplungsgegenstück **20** und ein Einsteckende **21,** über das die Bohrkrone 10 in einer Werkzeugaufnahme eines Kernbohrgerätes befestigt wird.

Im Bohrbetrieb wird die Bohrkrone 10 vom Kernbohrgerät um eine Bohrachse **22** angetrieben und in einer Bohrrichtung **23** parallel zur Bohrachse 22 in das zu bearbeitende Werkstück **24** bewegt. Die Bohrkrone 10 erzeugt im Werkstück 24 einen Bohrkern **25** und ein Bohrloch **26** mit einem Bohrlochdurchmesser **D.** Die lösbare erste Verbindung 14 zwischen dem Kupplungsstück 19 des Bohrschaftabschnittes 12 und dem Kupplungsgegenstück 20 des Aufnahmeabschnittes 13 kann dazu genutzt werden, den Bohrkern 25 aus der Bohrkrone 10 zu entfernen. Um den Bohrkern 25 zu entfernen, wird der Aufnahmeabschnitt 13 vom Bohrschaftabschnitt 12 entfernt und der Bohrkern 25 durch das Kupplungsstück 19 geschoben.

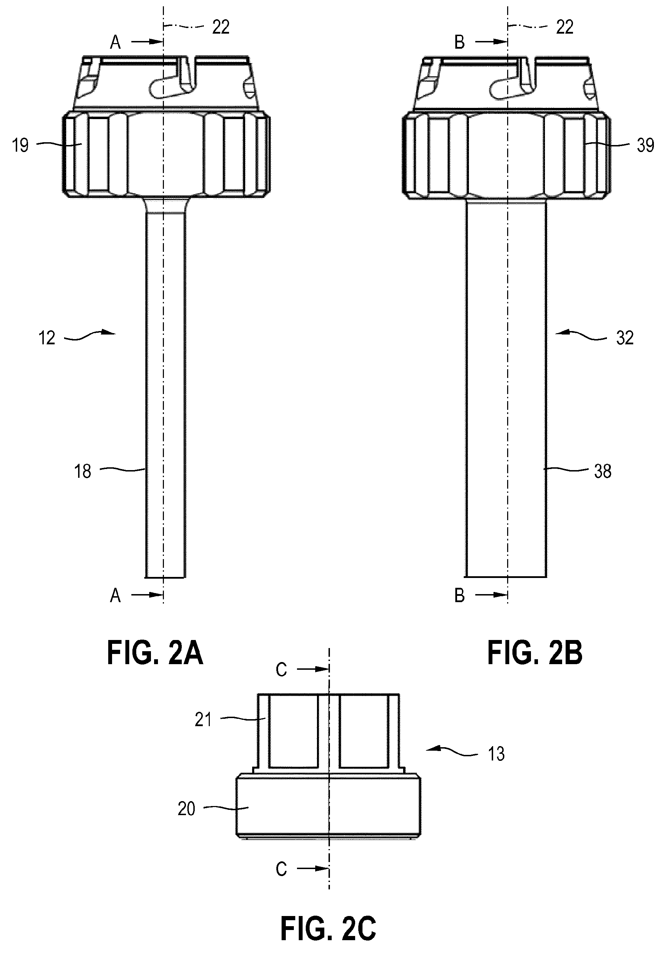

**FIGN. 2A-C** zeigen ein Set aus dem ersten Bohrschaftabschnitt 12 der FIG. 1 (FIG. 2A), einem weiteren Bohrschaftabschnitt **32** (FIG. 2B) und dem Aufnahmeabschnitt 13 der FIG. 1 (FIG. 2C) zum Aufbau der Bohrkrone 10. Der Bohrschaftabschnitt 12 wird im Weiteren als erster Bohrschaftabschnitt, der weitere Bohrschaftabschnitt 32 als zweiter Bohrschaftabschnitt und der Aufnahmeabschnitt 13 als erster Aufnahmeabschnitt 13 bezeichnet. Zur Unterscheidung der Bohrschaftabschnitte 12, 32 werden die Komponenten des ersten Bohrschaftabschnittes 12 als erste Komponenten und die Komponenten des zweiten Bohrschaftabschnittes 32 als zweite Komponenten bezeichnet.

Der erste Aufnahmeabschnitt 13 ist mit dem ersten Bohrschaftabschnitt 12 und dem zweiten Bohrschaftabschnitt 32 verbindbar. Der erste Bohrschaftabschnitt 12 umfasst den ersten Bohrschaft 18 und das erste Kupplungsstück 19, das mit dem ersten Bohrschaft 18 verbunden ist. Der zweite Bohrschaftabschnitt 32 umfasst einen zweiten Bohrschaft **38** und ein zweites Kupplungsstück **39,** das mit dem zweiten Bohrschaft 38 verbunden ist. Der erste und zweite Bohrschaft 18, 38 unterscheiden sich im Innen- und Außendurchmesser des Bohrschaftes 18, 38, im Innendurchmesser und in der Schaftbreite des Bohrschaftes 18, 38 oder im Innendurchmesser, Außendurchmesser und in der Schaftbreite des Bohrschaftes 18, 38.

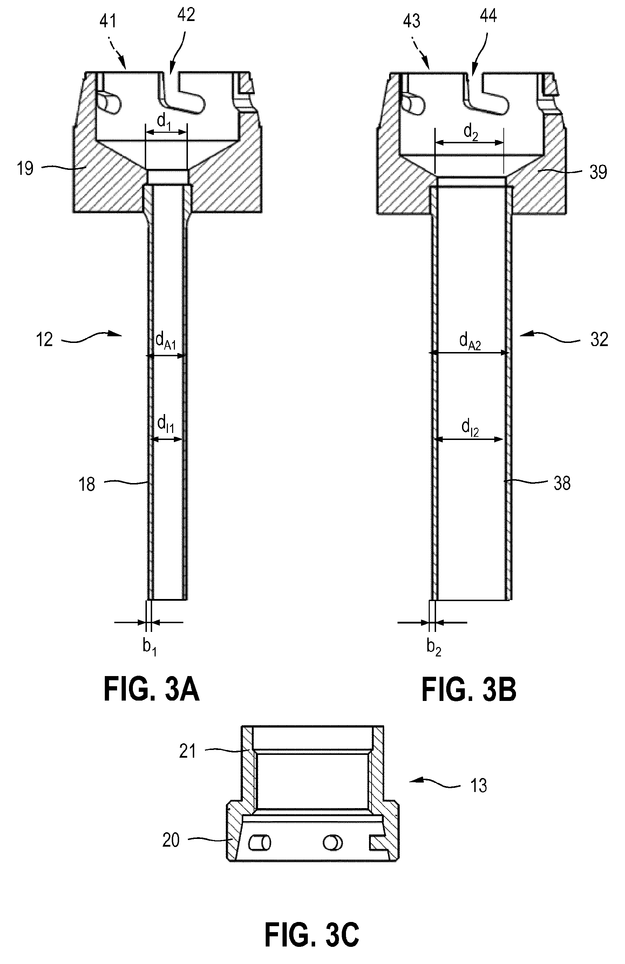

**FIGN. 3A-C** zeigen einen Längsschnitt durch den ersten Bohrschaftabschnitt 12 der FIG. 2A entlang der Schnittlinie A-A in FIG. 2A (FIG. 3A), einen Längsschnitt durch den zweiten Bohrschaftabschnitt 32 der FIG. 2B entlang der Schnittlinie B-B in FIG. 2B (FIG. 3B) und einen Längsschnitt durch den ersten Aufnahmeabschnitt 13 entlang der Schnittlinie C-C in FIG. 2C (FIG. 3C).

Der erste Bohrschaft 18 weist in einer Ebene senkrecht zur Bohrachse 22 eine ringförmige Querschnittsform mit einem ersten Innendurchmesser **d_{I1}**, einem ersten Außendurchmesser **d_{A1}** und einer ersten Schaftbreite **b₁** auf. Das erste Kupplungsstück 19 weist eine erste durchgehende Innenbohrung **41** und ein erstes Verbindungselement **42** auf. Das erste Verbindungselement 42 ist in Form von L-förmigen Schlitzen ausgebildet und die erste Innenbohrung 41 ist durchgehend mit einem ersten Öffnungsdurchmesser **d₁** ausgebildet. Um ein Verklemmen des Bohrkerns 25 in der ersten Innenbohrung 41 zu verhindern, ist der erste Öffnungsdurchmesser d₁ der ersten Innenbohrung 41 grösser als der erste Innendurchmesser d_{I1} des ersten Bohrschaftes 18 (d₁ > d_{I1}).

Der zweite Bohrschaft 38 weist in einer Ebene senkrecht zur Bohrachse 22 eine ringförmige Querschnittsform mit einem zweiten Innendurchmesser **d_{I2}**, einem zweiten Außendurchmesser **d_{A2}** und einer zweiten Schaftbreite **b₂** auf. Das zweite Kupplungsstück 39 weist eine zweite durchgehende Innenbohrung **43** und ein zweites Verbindungselement **44** auf. Das zweite Verbindungselement 44 ist in Form von L-förmigen Schlitzen ausgebildet und die zweite Innenbohrung ist durchgehend mit einem zweiten Öffnungsdurchmesser **d₂** ausgebildet. Um ein Verklemmen des Bohrkerns 25 in der zweiten Innenbohrung 43 zu verhindern, ist der zweite Öffnungsdurchmesser d₂ der zweiten Innenbohrung 43 grösser als der zweite Innendurchmesser d_{I2} oder gleich dem zweiten Innendurchmesser d_{I2} des zweiten Bohrschaftes 38 (d₂ ≥ d_{I2}).

Der erste Aufnahmeabschnitt 13, der mit dem ersten und zweiten Bohrschaftabschnitt 12, 32 verbindbar ist, umfasst das erste Kupplungsgegenstück 20 und das erste Einsteckende 21. Das erste Kupplungsgegenstück 20 des ersten Aufnahmeabschnittes 13 ist mit dem ersten Kupplungsstück 19 des ersten Bohrschaftabschnittes 12 und mit dem zweiten Kupplungsstück 39 des zweiten Bohrschaftabschnittes 32 verbindbar. Im Ausführungsbeispiel ist der erste Aufnahmeabschnitt 13 einteilig ausgebildet. Alternativ kann der erste Aufnahmeabschnitt 13 mehrteilig aus einem ersten Adapter, der das erste Kupplungsgegenstück 20 umfasst, und einem zweiten Adapter, der das erste Einsteckende 21 umfasst, ausgebildet sein, wobei der erste und zweite Adapter über eine lösbare Verbindung verbindbar sind.

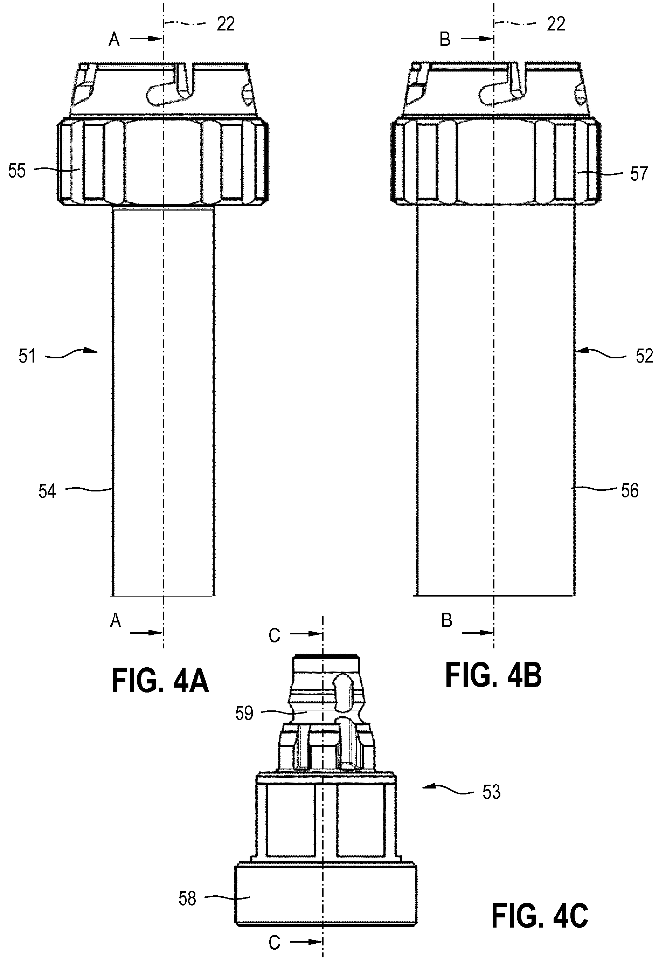

**FIGN. 4A-C** zeigen einen dritten Bohrschaftabschnitt **51** (FIG. 4A), einen vierten Bohrschaftabschnitt **52** (FIG. 4B) und einen zweiten Aufnahmeabschnitt **53** (FIG. 4C), die ein weiteres Set aus Bohrkronenabschnitten 51, 52, 53 zum Aufbau der Bohrkrone 10 bilden. Der zweite Aufnahmeabschnitt 53 ist mit dem dritten Bohrschaftabschnitt 51 und dem vierten Bohrschaftabschnitt 52 verbindbar. Die Komponenten des dritten Bohrschaftabschnittes 51 werden als dritte Komponenten und die Komponenten des vierten Bohrschaftabschnittes 52 als vierte Komponenten bezeichnet.

Der dritte Bohrschaftabschnitt 51 umfasst einen dritten Bohrschaft **54** und ein drittes Kupplungsstück **55,** das mit dem dritten Bohrschaft 54 verbunden ist. Der vierte Bohrschaftabschnitt 52 umfasst einen vierten Bohrschaft **56** und ein viertes Kupplungsstück **57,** das mit dem vierten Bohrschaft 56 verbunden ist. Der dritte und vierte Bohrschaft 54, 56 unterscheiden sich im Innen- und Außendurchmesser des Bohrschaftes, im Innendurchmesser und in der Schaftbreite des Bohrschaftes oder im Innendurchmesser, im Außendurchmesser und in der Schaftbreite des Bohrschaftes.

Der zweite Aufnahmeabschnitt 53, der mit dem dritten und vierten Bohrschaftabschnitt 51, 52 verbindbar ist, umfasst ein zweites Kupplungsgegenstück **58** und ein zweites Einsteckende **59,** über das die Bohrkrone in einer Werkzeugaufnahme eines Kernbohrgerätes befestigt wird. Das zweite Kupplungsgegenstück 58 des zweiten Aufnahmeabschnittes 53 ist mit dem dritten Kupplungsstück 55 des dritten Bohrschaftabschnittes 51 und mit dem vierten Kupplungsstück 57 des vierten Bohrschaftabschnittes 52 verbindbar.

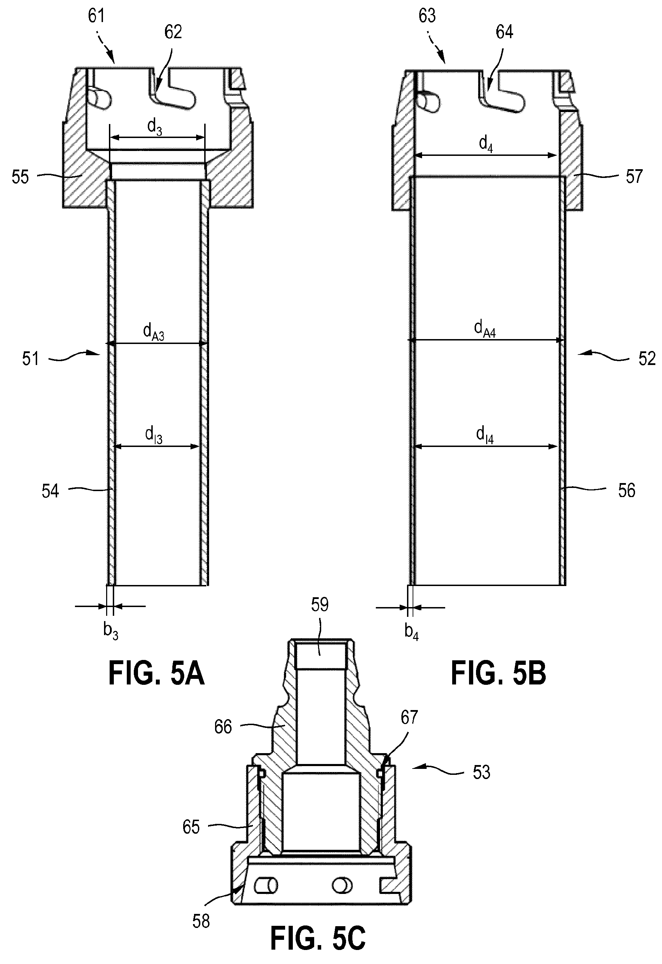

**FIGN. 5A****, B** zeigen einen Längsschnitt durch den dritten Bohrschaftabschnitt 51 der FIG. 4A entlang der Schnittlinie A-A in FIG. 4A (FIG. 5A), einen Längsschnitt durch den vierten Bohrschaftabschnitt 52 der FIG. 4B entlang der Schnittlinie B-B in FIG. 4B (FIG. 5B) und einen Längsschnitt durch den zweiten Aufnahmeabschnitt 53 entlang der Schnittlinie C-C in FIG. 4C (FIG. 5C).

Der dritte Bohrschaft 54 weist in einer Ebene senkrecht zur Bohrachse eine ringförmige Querschnittsform mit einem dritten Innendurchmesser **d_{I3}**, einem dritten Außendurchmesser **d_{A3}** und einer dritten Schaftbreite **b₃** auf. Das dritte Kupplungsstück 55 weist eine durchgehende dritte Innenbohrung **61** mit einem dritten Öffnungsdurchmesser **d₃** und ein drittes Verbindungselement **62** auf. Der dritte Öffnungsdurchmesser d₃ ist grösser als der dritte Innendurchmesser d_{I2} des dritten Bohrschaftes 54 (d₃ > d_{I3}).

Der vierte Bohrschaft 56 weist in einer Ebene senkrecht zur Bohrachse eine ringförmige Querschnittsform mit einem vierten Innendurchmesser **d_{I4}**, einem vierten Außendurchmesser **d_{A4}** und einer vierten Schaftbreite **b₄** auf. Das vierte Kupplungsstück 57 weist eine durchgehende vierte Innenbohrung **63** mit einem vierten Öffnungsdurchmesser **d₄** und ein viertes Verbindungselement **64** auf. Der vierte Öffnungsdurchmesser d₄ ist grösser als der vierte Innendurchmesser d_{I4} oder gleich dem vierten Innendurchmesser d_{I4} des vierten Bohrschaftes 56 (d₄ ≥ d_{I4}). Im Ausführungsbeispiel stimmt der vierte Öffnungsdurchmesser d₄ mit dem vierten Innendurchmesser d_{I4} überein.

Der zweite Aufnahmeabschnitt 53 ist zweiteilig aus einem ersten Adapter **65** und einem zweiten Adapter **66** ausgebildet, die über eine lösbare Verbindung **67** verbindbar sind. Der erste Adapter 65 umfasst das zweite Kupplungsgegenstück 58 und der zweite Adapter 66 umfasst das zweite Einsteckende 59. Die lösbare Verbindung 67 zwischen dem ersten und zweiten Adapter 65, 66 ist beispielsweise als Gewindeverbindung ausgebildet und bildet eine logistische Schnittstelle zwischen dem ersten und zweiten Adapter 65, 66.

Ein mehrteiliger zweiter Aufnahmeabschnitt 53 hat den Vorteil, dass verschiedene Einsteckenden 59 mit einer Bohrkrone kombiniert werden können oder das Einsteckende 59 mit mehreren Bohrkronen verwendet werden kann. Die mehrteilige Ausbildung des zweiten Aufnahmeabschnittes 53 bietet sich an, wenn eine Bohrkrone von Kernbohrgeräten mit unterschiedlichen Werkzeugaufnahmen angetrieben werden soll. Für jede Werkzeugaufnahme ist ein zweiter Adapter 66 mit passendem Einsteckende 59 vorgesehen. Die Anzahl an benötigten ersten Adaptern 65 des zweiten Aufnahmeabschnittes 53 entspricht der Anzahl an unterschiedlichen Kupplungsstücken 55, 57 der Bohrschaftabschnitte 51, 52. Alle zweiten Adapter 66 weisen die gleiche logistische Schnittstelle auf, so dass jeder erste Adapter 65 mit jedem zweiten Adapter 66 kombiniert werden kann.

## Patentansprüche

1. Set aus mehreren Bohrkronenabschnitten (12, 13, 32; 51, 52, 53) zum Aufbau einer Bohrkrone (10), die um eine Bohrachse (22) antreibbar ist, aufweisend:
▪ einen ersten Bohrschaftabschnitt (12) mit einem ersten Bohrschaft (18), der eine Querschnittsform mit einem ersten Außendurchmesser (d_{A1}) und einem ersten Innendurchmesser (d_{I1}) aufweist, und einem ersten Kupplungsstück (19), das eine durchgehende erste Innenbohrung (41) mit einem ersten Öffnungsdurchmesser (d₁) aufweist,
▪ einen zweiten Bohrschaftabschnitt (32) mit einem zweiten Bohrschaft (38), der eine Querschnittsform mit einem zweiten Außendurchmesser (d_{A2}) und einem zweiten Innendurchmesser (d_{I2}) aufweist, und einem zweiten Kupplungsstück (39), das eine durchgehende zweite Innenbohrung (43) mit einem zweiten Öffnungsdurchmesser (d₂) aufweist, wobei der zweite Innendurchmesser (d_{I2}) des zweiten Bohrschaftes (38) grösser als der erste Innendurchmesser (d_{I1}) des ersten Bohrschaftes (18) ist, und
▪ einen ersten Aufnahmeabschnitt (13) mit einem ersten Kupplungsgegenstück (20) und einem ersten Einsteckende (21),
**dadurch gekennzeichnet, dass** das erste Kupplungsgegenstück (20) des ersten Aufnahmeabschnittes (13) mit dem ersten Kupplungsstück (19) des ersten Bohrschaftabschnittes (12) und mit dem zweiten Kupplungsstück (39) des zweiten Bohrschaftabschnittes (32) verbindbar ist.

2. Set nach Anspruch 1, **dadurch gekennzeichnet, dass** der erste Öffnungsdurchmesser (d₁) der ersten Innenbohrung (41) grösser als der erste Innendurchmesser (d_{I1}) des ersten Bohrschaftes (18) ist und der zweite Öffnungsdurchmesser (d₂) der zweiten Innenbohrung (43) grösser oder gleich dem zweiten Innendurchmesser (d_{I2}) des zweiten Bohrschaftes (38) ist.

3. Set nach einem der Ansprüche 1 bis 2, **dadurch gekennzeichnet, dass** das erste und zweite Kupplungsstück (19, 39) eine im Wesentlichen identische Geometrie aufweisen.

4. Set nach einem der Ansprüche 1 bis 3, **dadurch gekennzeichnet, dass** das erste Kupplungsstück (19) aus einem ersten Kupplungsmaterial und das zweite Kupplungsstück (39) aus einem zweiten Kupplungsmaterial hergestellt ist.

5. Set nach Anspruch 3, **dadurch gekennzeichnet, dass** das erste und zweite Kupplungsstück (19, 39) als erstes Kupplungsteil ausgebildet sind.

6. Set nach Anspruch 1, **dadurch gekennzeichnet, dass** das erste Kupplungsgegenstück (20) und das erste Einsteckende (21) des ersten Aufnahmeabschnittes (13) einteilig ausgebildet sind.

7. Set nach Anspruch 1, **dadurch gekennzeichnet, dass** der erste Aufnahmeabschnitt (13) mehrteilig aus einem ersten Adapter, der das erste Kupplungsgegenstück (20) umfasst, und einem zweiten Adapter, der das erste Einsteckende (21) umfasst, ausgebildet ist, wobei der erste und zweite Adapter über eine lösbare Verbindung verbindbar sind.

8. Set nach einem der Ansprüche 1 bis 7, **gekennzeichnet durch**:
▪ einen dritten Bohrschaftabschnitt (51) mit einem dritten Bohrschaft (54), der eine Querschnittsform mit einem dritten Außendurchmesser (d_{A3}) und einem dritten Innendurchmesser (d_{I3}) aufweist, und einem dritten Kupplungsstück (55), das eine durchgehende dritte Innenbohrung (61) mit einem dritten Öffnungsdurchmesser (d₃) aufweist, wobei der dritte Innendurchmesser (d_{I3}) grösser als der zweite Innendurchmesser (d_{I2}) ist,
▪ einen vierten Bohrschaftabschnitt (52) mit einem vierten Bohrschaft (56), der eine Querschnittsform mit einem vierten Außendurchmesser (d_{A4}) und einem vierten Innendurchmesser (d_{I4}) aufweist, und einem vierten Kupplungsstück (57), das eine vierte Innenbohrung (63) mit einem vierten Öffnungsdurchmesser (d₄) aufweist, wobei der vierte Innendurchmesser (d_{I4}) grösser als der dritte Innendurchmesser (d_{I3}) ist, und
▪ einen zweiten Aufnahmeabschnitt (53) mit einem zweiten Kupplungsgegenstück (58) und einem zweiten Einsteckende (59).

9. Set nach Anspruch 8, **dadurch gekennzeichnet, dass** das zweite Kupplungsgegenstück (58) mit dem dritten Kupplungsstück (55) und dem vierten Kupplungsstück (57) verbindbar ist.

10. Set nach Anspruch 9, **dadurch gekennzeichnet, dass** der dritte Öffnungsdurchmesser (d₃) der dritten Innenbohrung (61) grösser als der dritte Innendurchmesser (d_{I3}) des dritten Bohrschaftes (54) ist und der vierte Öffnungsdurchmesser (d₄) der vierten Innenbohrung (63) grösser oder gleich dem vierten Innendurchmesser (d_{I4}) des vierten Bohrschaftes (56) ist.

11. Set nach einem der Ansprüche 9 bis 10, **dadurch gekennzeichnet, dass** das dritte und vierte Kupplungsstück (55, 57) eine im Wesentlichen identische Geometrie aufweisen.

12. Set nach einem der Ansprüche 9 bis 11, **dadurch gekennzeichnet, dass** das dritte Kupplungsstück (55) aus einem ersten Kupplungsmaterial und das vierte Kupplungsstück (57) aus einem zweiten Kupplungsmaterial hergestellt ist.

13. Set nach Anspruch 11, **dadurch gekennzeichnet, dass** das dritte und vierte Kupplungsstück (55, 57) als zweites Kupplungsteil ausgebildet sind.

14. Set nach Anspruch 8, **dadurch gekennzeichnet, dass** das zweite Kupplungsgegenstück (58) und das zweite Einsteckende (59) des zweiten Aufnahmeabschnittes (53) einteilig ausgebildet sind.

15. Set nach Anspruch 8, **dadurch gekennzeichnet, dass** der zweite Aufnahmeabschnitt (53) mehrteilig aus einem ersten Adapter (65), der das zweite Kupplungsgegenstück (58) umfasst, und einem zweiten Adapter (66), der das zweite Einsteckende (59) umfasst, ausgebildet ist, wobei der erste und zweite Adapter (65, 66) über eine lösbare Verbindung (67) verbindbar sind.
